# EUROPÄISCHE PATENTANMELDUNG

(11) **EP 1 063 259 A1**
(43) Veröffentlichungstag der Anmeldung: **27.12.2000**
(21) Anmeldenummer: 00111928.8
(22) Anmeldetag: 15.06.2000
(51) Int. Cl.: C08L 21/00, C08L 19/00, C08K 5/548

(54) **Mikrogelhaltige Kautschukcompounds mit schwefelhaltigen Organosiliciumverbindungen**

(30) Priorität: 26.06.1999 DE 19929347
(71) Anmelder: BAYER AG, 51368 Leverkusen (DE)
(72) Erfinder: Obrecht, Werner, Dr., 47447 Moers (DE); Jeske, Winfried, 51399 Burscheid (DE)

(57) **Zusammenfassung**

Die vorliegende Erfindung betrifft Kautschukmischungen aus mindestens einem doppelbindungshaltigen Kautschuk, mindestens einem Kautschukgel und mindestens einer schwefelhaltigen Organosiliziumverbindung. Aus den erfindungsgemäßen Kautschukmischungen können Vulkanisate hergestellt werden, die insbesondere zur Herstellung von Reifenlaufflächen dienen.

## Beschreibung

Die Erfindung betrifft den Zusatz schwefelhaltiger Organosiliciumverbindungen zu mikrogelhaltigen Kautschukmischungen und hieraus hergestellte Vulkanisate. Durch den Zusatz schwefelhaltiger Organosiliziumverbindungen zu mikrogelhaltigen Kautschukmischungen wird eine Verbesserung der mechanischen Eigenschaften und des DIN-Abriebwiderstands ohne Verschlechterung der Rollwiderstands-/Naßrutschfestigkeits-Relation von Laufflächencompounds erreicht.

Die Herstellung und Verwendung schwefelhaltiger Organosiliziumverbindungen wird u.a. in folgenden Patenten bzw. Patentanmeldungen beschrieben: DE 2.141.159 US 3.873.489, US 5.110.969, US 4.709.065 und US 5.227.425. In diesen Schriften wird der positive Einfluß schwefelhaltiger Organosiliciumverbindungen auf die mechanischen Eigenschaften kieselsäuregefüllter Vulkanisaten dargelegt. Nicht gelehrt wird in diesen Veröffentlichungen die Verwendung schwefelhaltiger Organosiliziumverbindungen zur Verbesserung des Niveaus mechanischer Eigenschaften ohne Verschlechterung der Hystereseeigenschaften mikrogelhaltiger Kautschukcompounds.

Der Verwendung von Mikrogelen in Kautschukcompounds wird in folgenden Patentanmeldungen bzw. Patenten beschrieben: EP 405216, DE 4220563, GB 1078400 und DE 19 701 489. In EP 405 216, DE 4220 563 sowie in GB 1078400 werden die Verwendung von CR-, BR- und NBR-Mikrogelen für Mischungen mit doppelbindungshaltigen Kautschuken und für die Herstellung der entsprechenden Vulkanisate beansprucht. Die Vulkanisate sind insbesondere für die Herstellung von Reifenlaufflächen geeignet, da sie bei 70°C hohe Rückprallelastizitäten und damit einen niedrigen Rollwiderstand und bei 23°C eine niedrige Rückprallelastizität und damit eine hohe Naßrutschfestigkeit aufweisen. Insbesondere die Differenz der Rückprallelastizitäten zwischen 70°C und 23°C ist charakteristisch für die mikrogelhaltigen Vulkanisate. Für den technischen Einsatz in Reifenlaufflächen sind die mechanischen Eigenschaften der mikrogelhaltigen Vulkanisate allerdings nicht ausreichend. Defizite bestehen insbesondere im Niveau der mechanischen Vulkanisateigenschaften. Hier besteht der Bedarf, das Produkt aus Spannungswerts bei 300% Dehnung und Reißdehnung sowie den Abriebwiderstand zu verbessern.

Es bestand daher die technische Aufgabe, das mechanische Werteniveau (Spannungswert/300% x Reißdehnung) sowie den Abriebwiderstand mikrogelhaltiger Kautschukvulkanisate zu verbessern, ohne die Differenz der Rückprallelastizitäten bei 70°C und 23°C zu verschlechtern.

Es wurde jetzt gefunden, daß durch den Zusatz schwefelhaltiger Organosiliziumverbindungen zu mikrogelhaltigen Kautschukcompounds das Niveau der mechanischen Eigenschaften (Spannungswert/300% x Reißdehnung) mikrogelhaltiger Vulkanisate verbessert werden kann, ohne daß die Differenz der Rückprallelastizitäten bei 70°C und 23°C verschlechtert wird.

Gegenstand der Erfindung sind daher Kautschukmischungen aus mindestens einem doppelbindungshaltigen Kautschuk (A), mindestens einem Kautschukgel (B) und mindestens einer schwefelhaltigen Organosiliciumverbindung (C), wobei der Anteil an doppelbindungshaltigem Kautschuk (A) 100 Gew.-Teile, der Anteil an Kautschukgel (B) 1 bis 150 Gew.-Teile, bevorzugt 10 bis 100 Gew.-Teile, und der Anteil an siliciumorganischer Schwefelverbindung (C) 0,2 bis 20, bevorzugt 1 bis 10 Gew.-Teile, beträgt, sowie gegebenenfalls Kautschukhilfsmitteln und gegebenenfalls weiteren Füllstoffen.

Unter doppelbindungshaltigem Kautschuk (A) versteht man die Kautschuke, die praktisch keinen Gelanteil enthalten und die nach DIN/ISO 1629 als als R-Kautschuke bezeichnet werden. Diese Kautschuke haben in der Hauptkette eine Doppelbindungen. Hierzu gehören z.B.:
- NR:: Naturkautschuk
- SBR:: Styrol/Butadienkautschuk
- BR:: Polybutadienkautschuk
- NBR:: Nitrilkautschuk
- IIR:: Butylkautschuk
- HNBR:: Hydrierter Nitrilkautschuk
- SNBR:: Styrol/Butadien/Acrylnitril-Kautschuk
- CR:: Polychloropren
- XSBR:: carboxylierter Styrol/Butadien-Kautschuk
- XNBR:: Carboxylierter Butadien/Acrylnitril-Kautschuk
- ENR:: Epoxydierter Naturkautschuk
- ESBR:: Epoxydierter Styrol/Butadien-Kautschuk

Unter doppelbindungshaltigen Kautschuken sollen aber auch Kautschuke verstanden werden, die nach DIN/ISO 1629 M-Kautschuke sind und neben der gesättigten Hauptkette Doppelbindungen in Seitenketten aufweisen. Hierzu gehört z.B. EPDM.

Bevorzugt sind: NR, BR, SBR, IIR und EPDM.

Unter Kautschukgelen (B) werden Kautschukpartikel (Mikrogele) verstanden, die durch Vernetzung folgender Kautschuke erhalten werden:
- BR:: Polybutadien,
- ABR:: Butadien/AcrylsäureC1-4Alkylestercopolymere,
- IR:: Polyisopren,
- SBR:: Styrol-Butadien-Copolymerisate mit Styrolgehalten von 1-60, vorzugsweise 2-50 Gewichtsprozent,
- X-SBR:: carboxlylierte Styrol-Butadien-Copolymerisate
- FKM:: Fluorkautschuk,
- ACM:: Acrylatkautschuk,
- NBR:: Polybutadien-Acrylnitril-Copolymerisate mit Acrylnitrilgehalten von 5-60, vorzugsweise 10-50 Gewichtsprozent,
- X-NBR:: carboxlierte Nitrilkautschuke,
- CR:: Polychloropren,
- IIR:: Isobutylen/Isopren-Copolymerisate mit Isoprengehalten von 0,5-10 Gewichtsprozent,
- BIIR:: bromierte Isobutylen/Isopren-Copolymerisate mit Bromgehalten von 0,1-10 Gewichtsprozent,
- CIIR:: chlorierte Isobutylen/Isopren-Copolymerisate mit Bromgehalten von 0,1-10 Gewichtsprozent,
- HNBR:: teil- und vollhydrierte Nitrilkautschuke,
- EPDM:: Ethylen-Propylen-Dien-Copolymerisate,
- EAM:: Ethylen/Acrylatcopolymere,
- EVM:: Ethylen/Vinylacetatcopolymere,
- ECO:: Epichlorhydrinkautschuk,
- Q:: Silikonkautschuke,
- AU:: Polyesterurethanpolymerisate,
- EU:: Polyetherurethanpolymerisate,
- ENR:: Epoxydierter Naturkautschuk oder Mischungen davon.

Bevorzugt sind Gele auf Basis von NR, BR, SBR, CR und NBR.

Die Kautschukgele (B) können selbstverständlich noch Hydroxyl- und/oder Carboxyl-Gruppen enthalten. Bevorzugt für den Einsatz in den erfindungsgemäßen Kautschukmischungen sind solche Kautschukgele, die Hydroxylgruppen enthalten.

Die Mikrogele besitzen Teilchendurchmesser von 5-1000 nm, bevorzugt 20-600 nm (DVN-Wert nach DIN 53206). Aufgrund ihrer Vernetzung sind sie unlöslich und in geeigneten Quellmitteln wie z.B. Toluol quellbar. Die Quellungsindizes der Mikrogele (Qᵢ) in Toluol betragen 1-15, vorzugsweise 1-10. Der Quellungsindex wird aus dem Gewicht des lösungsmittelhaltigen Gels (nach Zentrifugation mit 20.000 Upm) und dem Gewicht des trockenen Gels berechnet:
Qᵢ = Naßgewicht des Gels/Trockengewicht des Gels.

Zur Ermittlung des Quellungsindex läßt man 250 mg Gel in 25 ml Toluol 24 h unter Schütteln quellen. Das Gel wird abzentrifugiert und gewogen und anschließend bei 70 °C bis zur Gewichtskonstanz getrocknet und nochmals gewogen.

Die Herstellung der unvemetzten Kautschuk-Ausgangsprodukte kann in bekannter Weise durch Emulsionspolymerisation oder durch Lösungspolymerisation erfolgen.

Außerdem können natürlich vorkommende Latices wie Naturkautschuklatex eingesetzt werden.

Bei der Herstellung von Mikrogelen durch Emulsionspolymerisation werden folgende radikalisch polymerisierbare Monomere eingesetzt: Butadien, Styrol, Acrylnitril, Isopren, Ester der Acryl- und Methacrylsäure, Tetrafluorethylen, Vinylidenfluord, Hexafluorpropen, 2-Chlorbutadien, 2,3-Dichlorbutadien sowie doppelbindungshaltige Carbonsäuren wie z.B. Acrylsäure, Methacrylsäure, Maleinsäure, Itaconsäure, doppelbindungshaltige Hydroxyverbindungen wie z.B. Hydroxyethylmethacrylat, Hydroxyethylacrylat, Hydroxybutylmethacrylat oder doppelbindungshaltige Epoxide, wie beispielsweise Glycidylmethacrylat oder Glycidylacrylat. Die Vernetzung des Kautschukgels kann direkt während der Emulsionspolymerisation durch Copolymerisation mit vemetzend wirkenden multifunktionellen Verbindungen erreicht werden. Bevorzugte multifunktionelle Comonomere sind Verbindungen mit mindestens zwei, vorzugsweise 2 bis 4 copolymerisierbaren C=C-Doppelbindungen, wie Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleimid, 2,4-Toluylenbis(maleimid) und/oder Triallyltrimellitat. Darüber hinaus kommen in Betracht die Acrylate und Methacrylate von mehrwertigen, vorzugsweise 2 bis 4-wertigen C₂ bis C₁₀ Alkoholen, wie Ethylenglykol, Propandiol-1,2,butandiol, Hexandiol, Polyethylenglykol mit 2 bis 20, vorzugsweise 2 bis 8 Oxyethyleneinheiten, Neopentylglykol, Bisphenol-A, Glycerin, Trimethlypropan, Pentaerythrit, Sorbit mit ungesättigten Polyestern aus aliphatischen Di- und Polyolen sowie Maleinsäure, Fumarsäure und/oder Itaconsäure.

Die Vernetzung zu Kautschukgelen während der Emulsionspolymerisation kann auch durch Fortführung der Polymerisation bis zu hohen Umsätzen oder im Monomerzulaufverfahren durch Polymerisation mit hohen internen Umsätzen erfolgen. Eine andere Möglichkeit besteht auch in der Durchführung der Emulsionspolymerisation in Abwesenheit von Reglern.

Für die Herstellung stark- und/oder auch schwach vernetzter Polymerer im Anschluß an die Emulsionspolymerisation setzt man am besten die Latices ein, die bei der Emulsionspolymerisation erhalten werden. Auch Naturkautschuklatices können auf diese Weise vernetzt werden. Die Methode kann auch auf Polymerdispersionen angewandt werden, die durch Umlösung aus organischen Lösungen zugänglich sind. Prinzipiell kann diese Methode auch bei nichtwässrigen Polymerdispersionen angewandt werden.

Geeignet vernetzend wirkende Chemikalien sind beispielsweise organische Peroxide, wie Dicumylperoxid, t-Butylcumylperoxid, Bis-(t-butyl-peroxy-isopropyl)benzol, Di-t-butylperoxid, 2,5-Ditmethylhexan-2,5-dihydroperoxid, 2,5-Dimethylhexin-3,2,5-dihydroperoxid, Dibenzoylperoxid, Bis-(2,4-dichlorobenzoyl)peroxid, t-Butylperbenzoat sowie organische Azoverbindungen, wie Azo-bis-isobutyronitril und Azo-bis-cyclohexannitril, sowie Di- und Polymercaptoverbindungen, wie Dimercaptoethan, 1,6-Dimercaptohexan, 1,3,5-Trimercaptotriazin, und mercaptoterminierte Polysulfidkautschuke, wie mercaptoterminierte Umsetzungsprodukte von bis-Chlorethylformal mit Natriumpolysulfid. Die optimale Temperatur zur Durchführung der Nachvernetzung ist naturgemäß von der Reaktivität des Vernetzers abhängig und kann bei Temperaturen von Raumtemperatur bis ca. 180°C gegebenenfalls unter erhöhtem Druck durchgeführt werden (siehe hierzu Houben-Weyl, Methoden der organischen Chemie, 4. Auflage, Band 14/2, Seite 848). Besonders bevorzugte Vernetzungsmittel sind Peroxide.

Die Vernetzung C=C Doppelbindungen enthaltender Kautschuke zu Mikrogelen kann auch in Dispersion oder Emulsion bei gleichzeitiger, partieller, gegebenenfalls vollständiger Hydrierung der C=C Doppelbindung durch Hydrazin, wie in US 5,302,696 oder US 5,442,009 beschrieben, oder durch andere Hydrierungsmittel, beispielsweise Organometallhydridkomplexe, erfolgen.

Auch Kautschuke, die durch Lösungspolymerisation hergestellt werden, können als Ausgangsprodukte für die Herstellung der Mikrogele dienen. In diesen Fällen geht man von den Lösungen dieser Kautschuke in geeigneten organischen Lösungen aus. Man stellt die gewünschten Größen der Mikrogele dadurch her, daß man die Kautschuklösung in einem flüssigen Medium, vorzugsweise in Wasser gegebenenfalls unter Zugabe geeigneter oberflächenaktiver Hilfsmitteln, wie z.B. Tensiden, mittels geeigneter Aggregate mischt, so daß eine Dispersion des Kautschuks im geeigneten Teilchengrößenbereich erhalten wird. Für die Vernetzung der dispergierten Lösungskautschuke geht man wie zuvor für die nachträgliche Vernetzung von Emulsionspolymerisaten beschriebenen, vor. Als Vernetzer eignen sich die zuvor genannten Verbindungen, wobei man das für die Herstellung der Dispersion eingesetzte Lösungsmittel gegebenenfalls vor der Vernetzung z.B. destillativ entfernen kann.

Die schwefelhaltigen Organosiliciumverbindungen (C) haben folgende Grundstrukturen: 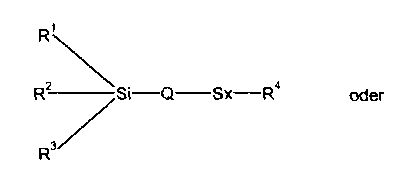 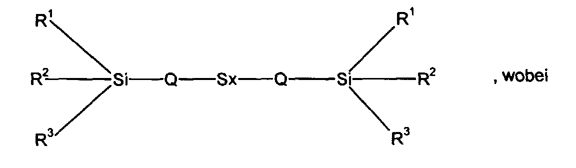
- R¹, R² und R³: für Alkoxygruppen mit 1 bis 20 C-Atomen stehen,
- X: für ganze Zahlen von 2 bis 8 steht,
- Q: eine Spacergruppe mit Strukturelementen auf der Basis von aliphatischen, heteroaliphatischen, aromatischen und heteroaromatischen Kohlenstoffketten, mit 1 bis 20 C-Atomen und 1 bis 3 Heteroatomen, wie N, S, O ist und
- R⁴: eine Gruppe, die sich insbesondere in sogenannten Vulkanisationsbeschleunigern findet, darstellt, beispielsweise: 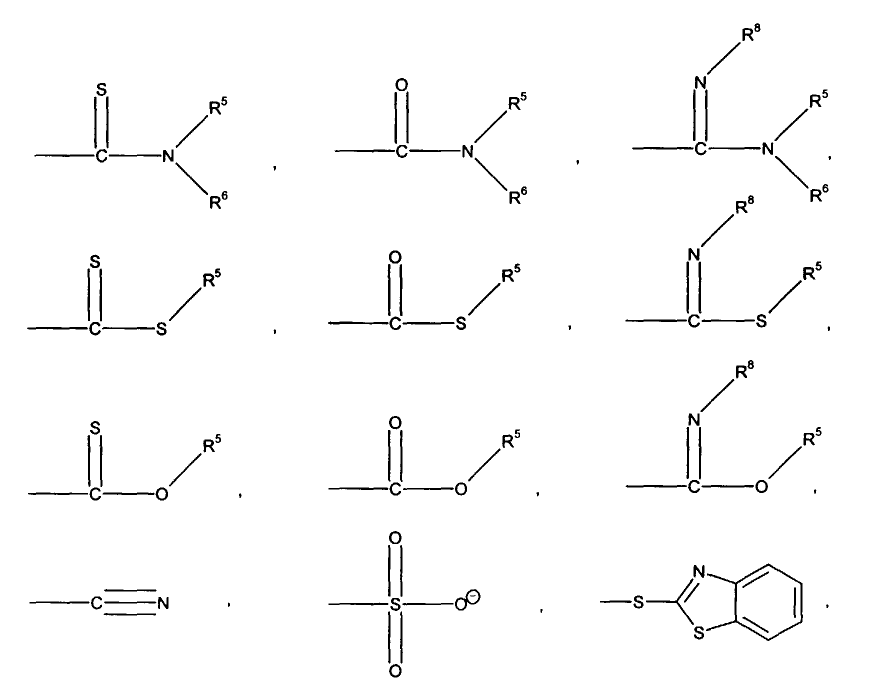 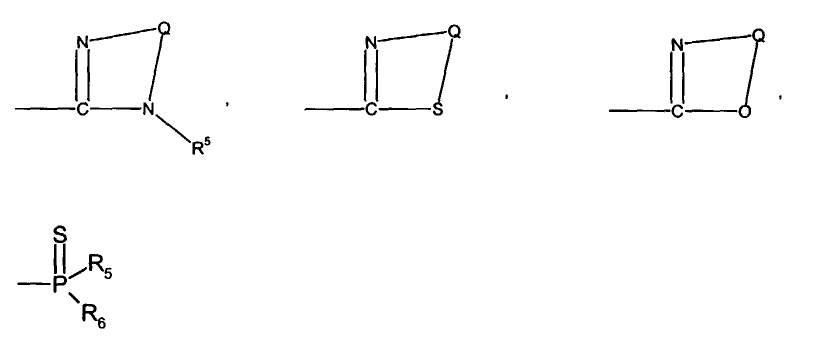
wobei R⁵, R⁶ und R⁸ für C₁-C₁₀-Alkyl, C₆-C₁₀-Aryl sowie C₇-C₁₂-Aralkyl stehen und Q die obige Bedeutung hat.

Die bevorzugte schwefelhaltige Organosiliciumverbindung ist das nachstehend formelmäßig dargestellte Bis(tri-ethoxy-silyl-propyl-disulfan). Ein derartiges Produkt ist als Si 69 der Fa. Degussa kommerziell verfügbar:

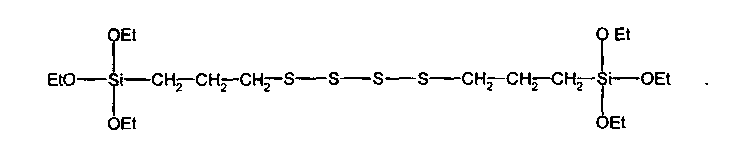

Die erfindungsgemäßen Kautschukmischungen aus doppelbindungshaltigem Kautschuk (A), Kautschukgel (B) und schwefelhaltiger Organosiliciumverbindung (C) können zusätzliche weitere Komponenten wie Füllstoffe enthalten.

Besonders geeignete Füllstoffe zur Herstellung der erfindungsgemäßen Kautschukmischungen und -vulkanisate sind:
- Ruße. Die hierbei zu verwendenden Ruße sind nach dem Flammruß-, Furnace- oder Gasrußverfahren hergestellt und besitzen BET-Oberflächen von 20-200 m²/g wie z.B: SAF-, ISAF-, IISAF-, HAF-, FEF- oder GPF-Ruße;
- hochdisperse Kieselsäure, hergestellt z.B. durch Fällungen von Lösungen von Silikaten oder Flammhydrolyse von Siliciumhalogeniden mit spezifischen Oberflächen von 5-1000, vorzugsweise 20-400 m²/g (BET-Oberfläche) und Primärteilchengrößen von 5-400 nm. Die Kieselsäuren können ggf. auch als Mischoxide mit anderen Metalloxiden, wie Al-, Mg-, Ca-, Ba, Zn- und Ti Oxiden vorliegen;
- synthetische Silikate, wie Aluminiumsilikat, Erdalkalisilikat, wie Magnesiumsilikat oder Calciumsilikat mit BET-Oberflächen von 20-400 m²/g und Primärteilchendurchmessern von 5-400 nm;
- natürliche Silikate, wie Kaolin und andere natürlich vorkommende Kieselsäuren;
- Metalloxide, wie Zinkoxid, Calciumoxid, Magnesiumoxid, Aluminiumoxid;
- Metallcarbonate, wie Calciumcarbonat, Magnesiumcarbonat, Zinkcarbonat;
- Metallsulfate, wie Calciumsulfat, Bariumsulfat;
- Metallhydroxide, wie Aluminiumhydroxid und Magnesiumhydroxid;
- Glasfasern und Glasfaserprodukte (Latten, Stränge oder Mikroglaskugeln);
- Thermoplastfasern (Polyamid, Polyester, Aramid);
- Kautschukgele auf Basis CR, BR, SBR oder auch aller anderen vorher beschriebenen Gelpartikel, die einen hohen Vernetzungsgrad besitzen, mit Teilchengröße von 5-1000 nm.

Die genannten Füllstoffe können allein oder im Gemisch eingesetzt werden. In einer besonders bevorzugten Ausführung des Verfahrens werden 10-100 Gewichtsteile Kautschukgel (B), gegebenenfalls zusammen mit 0,1-100 Gewichtsteilen Ruß und/oder 0,1-100 Gewichtsteilen hellen Füllstoffen, jeweils bezogen auf 100 Gewichtsteile unvernetzten Kautschuks, eingesetzt.

Die erfindungsgemäßen Kautschukmischungen können darüber hinaus noch übliche Kautschukhilfsmittel enthalten, wie Vernetzer, Reaktionsbeschleurnger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachs, Streckmittel, organische Säuren, Verzögerer, Metalloxide, sowie Füllstoffaktivatoren, wie Triethanolamin, Polyethylenglykol, Hexantriol oder anderen, die in der Gummiindustrie bekannt sind.

Die Kautschukhilfsmittel werden in üblichen Mengen, die sich u.a. nach dem Verwendungszweck richten, eingesetzt. Übliche Mengen sind z.B. Mengen von 0,1-50 Gewichtsprozent, bezogen auf eingesetzte Mengen an Kautschuk (A).

Als übliche Vernetzer können Schwefel, Schwefelspender, Peroxide oder Vernetzungsmittel, wie beispielsweise Diisopropenylbenzol, Divinylbenzol, Divinylether, Divinylsulfon, Diallylphthalat, Triallylcyanurat, Triallylisocyanurat, 1,2-Polybutadien, N,N'-m-Phenylen-maleimid und/oder Triallyltrimellitat verwendet werden. Darüber hinaus kommen in Betracht die Acrylate und Metacrylate von mehrwertigen, vorzugsweise 2 bis 4-wertigen C₂- bis C₁₀-Alkoholen, wie Ethylenglykol, Propandiol-1,2,butandiol, Hexandiol, Polyethylenglykol mit 2 bis 20, vorzugsweise 2 bis 8 Oxyethyleneinheiten, Neopentylglykol, Bisphenol-A, Glycerin, Trimethylpropan, Pentaerythrit, Sorbit mit ungesättigten Polyestern aus aliphatischen Di- und Polyolen sowie Maleinsäure, Fumarsäure, und/oder Itaconsäure.

Die erfindungsgemäßen Kautschukmischungen können darüber hinaus Vulkanisationsbeschleuniger enthalten. Beispiele für geeignete Vulkanisationsbeschleuniger sind z.B. Mercaptobenzthiazole, Mercaptosulfenamide, Guanidine, Thiurame, Dithiocarbamate, Thioharnstoffe und Thiocarbonate sowie Dithiophosphate. Die Vulkanisationsbeschleuniger, Schwefel und Schwefelspender oder Peroxide oder weitere Vernetzungsmittel wie beispielsweise dimeres 2,4-Toluyliden-di-isocyanat (= Desmodur® TT) oder 1,4-bis-1-Ethoxyhydrochinon (= Vernetzer 30/10) werden in Mengen von 0,1-40 Gewichtsprozent, bevorzugt 0,1 -10 Gewichtsprozent, bezogen auf die gesamte Menge an Kautschuk eingesetzt. Die Vulkanisation der erfindungsgemäßen Kautschukmischungen kann bei Temperaturen von 100-250°C, bevorzugt 130-180°C, gegebenenfalls unter Druck von 10-200 bar erfolgen.

Die erfindungsgemäßen Mischungen aus ungesättigtem Kautschuk (A), Kautschukgel (B) und schwefelhaltiger Organosiliciumverbindung (C) können auf verschiedene Arten hergestellt werden:

Zum einen ist es selbstverständlich möglich, die festen Einzelkomponenten zu mischen. Dafür geeignete Aggregate sind beispielsweise Walze, Innenmischer oder auch Mischextruder. Aber auch das Mischen durch Vereinigen der Latices der unvernetzten oder auch der vernetzen Kautschuke ist möglich. Isolierung der so hergestellten erfindungsgemäßen Mischung kann wie üblich, durch Eindampfen, Ausfällen oder Gefrierkoagulation (vgl. US-PS-2.187.146) erfolgen. Durch Einmischen von Füllstoffen in die Latexmischung und anschließende Aufarbeitung können die erfindungsgemäßen Mischungen direkt als Kautschuk-/Füllstoff-Formulierung erhalten werden. Der Zusatz weiterer Mischungsbestandteile zur Kautschukmischung aus doppelbindungshaltigem Kautschuk (A), Kautschukgel (B) und schwefelhaltiger Organo-siliciumverbindung (C) wie zusätzlichen Füllstoffen sowie gegebenenfalls Kautschukhilfsmitteln erfolgt in üblichen Mischaggregaten, Walzen, Innenmischer oder auch Mischextrudern. Bevorzugte Mischtemperaturen liegen bei 50-180°C.

Aus den erfindungsgemäßen Kautschukmischungen können durch Vulkanisation entsprechende Vulkanisate hergestellt werden, sie sich zur Herstellung von Formkörpern eignen, z.B. für die Herstellung von Kabelmänteln, Schläuchen, Treibriemen, Förderbändern, Walzenbelägen, Reifen, insbesondere Reifenlaufflächen, Schuhsohlen, Dichtungsringen und Dämpfungselementen sowie Membranen, besonders bevorzugt für die Herstellung von Reifenlaufflächen.

### Beispiele

Der efindungsgemäße Effekt wird mit Compounds, die die nachfolgend aufgeführten Gele enthalten, demonstriert:
SBR-Mikrogel mit 22 Gew.% Styrol [Gel (1)]
Hydroxylgruppenmodifiziertes SBR-Mikrogel mit 22 Gew.% Styrol [Gel (2)]
Hydroxylgruppenmodifiziertes SBR-Mikrogel mit 39 Gew.% Styrol [Gel (3)]

### Herstellung der Kautschukgele

### SBR-Mikrogels mit 22 Gew.% Styrol (Gel 1) vorliegend in einem NR-Masterbatch

Der NR-Masterbatch auf der Basis des Gels (1) wird ausgehend von Baystal 1357 der Polymer Latex GmbH (früher: Bayer France, Port Jérôme) durch Vernetzung mit Dicumylperoxid hergestellt. Das vernetzte Gel, das als Latex vorliegt, wird mit Naturkautschuklatex gemischt bevor die Latexmischung aufgearbeitet wird. Der Masterbatch enthält 50 Gew.% des Gels (1).

Baystal 1357 ist ein nichtcarboxylierter SBR-Latex mit einem Styrolgehalt von 22 Gew.% und einem Feststoffgehalt von 38 Gew.%. Der Gelgehalt beträgt 75 Gew.% und der Quellungsindex des vergelten Anteils beträgt 61 (Naßgewicht/ Trockengewicht in Toluol). Die Latexteilchen haben einen Durchmesser von d₁₀= 50 nm, d₅₀= 56 nm und d₈₀= 60 nm. Die Dichte der Latexteilchen beträgt 0,9281 g/cm³. Die Glastemperatur des SBRs liegt bei -57°C.

Für die Vernetzung mit Dicumylperoxid (DCP) wird der Latex auf eine Feststoffkonzentration von 30 Gew.% verdünnt und in einen Autoklaven gefüllt. DCP wird in fester Form bei Raumtemperatur zugegeben (1,5 phr bezogen auf Festprodukt). Durch Aufheizen des Latex auf 60°C wird das DCP aufgeschmolzen und unter Rühren gut im Latex verteilt. Zur Entfernung von Sauerstoff wird der Reaktorinhalt bei 60°C unter Rühren evakuiert und Stickstoff aufgepresst. Der Evakuierungs/N2-Begasungszyklus wird 3 mal wiederholt. Danach wird der Reaktor auf 150°C aufgeheizt. Um Latexanbackungen beim Aufheizen zu vermeiden, wird darauf geachtet, daß die Differenz zwischen Mantel- und Innentempertur 10°C nicht übersteigt. Nach dem Aufheizen wird die Innentemperatur 45 Min. bei mindestens 150°C gehalten. Danach wird der Latex abgekühlt und über ein Monodurtuch filtriert. Durch die Nachvernetzung mit DCP wird die Teilchengröße des Latex praktisch nicht beeinflußt; der Gelgehalt steigt auf 97,5 % und die Dichte auf 0,9717 g/cm³, der Quellungsindex nimmt auf 5,4 % ab und die Glastemperatur steigt auf -26,5°C.

5 kg des so behandelten SBR-Kautschuk-Latex mit einem Feststoffgehalt von 30 Gew.% werden in eine Mischung aus 5 kg Naturkautschuklatex mit einem Feststoffgehalt von 30 Gew.%, 300 g einer 5 %igen wäßrigen Harzseifenlösung (Dresinate 731, Hersteller: Hercules) und 150 g einer 10 %igen wäßrigen Dispersion des Alterungsschutzmittels Vulkanox 4020 (Hersteller: Bayer AG) eingerührt.
Die erhaltene Latexmischung enthält vernetzten Kautschuk und Naturkautschuk im Gewichtsverhältnis 1:1.
Zur Fällung von 3 kg Kautschukmischung werden 10,45 kg der Latexmischung bei 65°C in eine Lösung von 225 g NaCl, 40,8 g Al₂(SO₄)₃ x 18 H₂O, 4,5 g Gelatine in 30 l Wasser eingerührt, wobei der pH-Wert durch Zugabe von 10 %iger H₂SO₄ bei 4 gehalten wird. Das Produkt wird gründlich mit Wasser gewaschen und 2 Tage bei 70°C im Vakuum getrocknet.
Man erhält einen Masterbatch bestehend aus 50 Gew.% vernetzter SBR-Mikrogele mit 50 Gew.% Naturkautschuk.

### Hydroxylgruppenmodifiziertes SBR-Mikrogel mit 22 Gew.% Styrol [Gel (2)]

Das Gel (2) wird wie bei Gel (1) beschrieben hergestellt, wobei vor der Aufarbeitung des Gels eine Pfropfung mit 3 phr Hydroxyethylmethacrylat (HEMA) erfolgt. Außerdem wird das Gel nicht als Masterbatch aufgearbeitet.

Für die Pfropfung des Gels mit Hydroxymethylmethacrylat (HEMA) legt man den mit 1,5 phr Dicumylperoxid vernetzten Baystal-Latex in einem 3-Hals-Kolben vor und verdünnt den Latex mit Wasser, so daß der theoretische Endfeststoffgehalt des Latex bei quantitativem HEMA-Umsatz 20 Gew.% beträgt. Nach dem Zusatz von 3 phr 97 %igen HEMAs (Aldrich) bezogen auf den Latexfeststoffgehalt und der Zugabe von 0,12 phr 50 %iges p-Menthanhydroperoxid (Triganox NT 50/Akzo Chemie) erhitzt man unter Rühren die Reaktionsmischung auf 70°C und rührt 1 h bei dieser Temperatur. Dann gibt man innerhalb von 1 h 0,05 Gew.% bezogen auf Latexfeststoff einer wässrigen 0,5 Gew.%igen wässrigen Lösung des Na-Salzes von 1-Hydroxymethansulfinsäure-Dihydrat (Rongalit/BASF) zu. Während der gesamten Umsetzung hält man den PH-Wert durch Zugabe 1 N NaOH bei pH = 9 konstant. Nach einer Reaktionszeit von 1 h bei 70°C hat der Latex einen Polymerisationsumsatz von ca. 90 %. Die Dichte der Latexteilchen beträgt 0,987 g/cm³.

Vor der Fällung des hydroxylmodifizierten SBR-Latex rührt man in den Latex folgende Alterungsschutzmittel jeweils in Mengen bezogen auf 100 Gew.-Teile Feststoff [phr] ein:
- 0,05 phr: 2,2-Methylen-bis-(4-Methyl-6-cyclohexylphenol) (Vulkanox ZKF/Bayer AG)
- 0,22 phr: Di-t-Butyl-p-Kresol (BHT/Bayer AG)
- 0,38 phr: Di-Laurylthiodipropionat (PS 800 der Ciba Geigy)

Für die Fällung von 5,035 kg eines 19,86 %igen Latex legt man folgende Fällflotte vor:
- 6000 g: Wasser
- 795,6 g: Kochsalz
- 425,0 g: Superfloc C 567/1 %ig (American Cyanamide Corporation)

Man erhitzt die Fällflotte auf 60°C und stellt mit 10%iger Schwefelsäure einen pH-Wert 4 ein. Unter Einhaltung dieses PH-Werts gibt man den Latex in die Fällflotte.

Nach der Latexzugabe erhitzt man die Mischung auf 60°C und kühlt durch Zugabe kalten Wassers auf ca 30°C ab. Man wäscht die Kautschukkrümel insgesamt 2mal, indem man die flüssige Phase aus dem Fällbehälter entfernt und ca. 10 l kalten Wassers bezogen auf Feststoff unter Rühren zugibt.

Nach der 2. Wäsche isoliert man die Kautschukkrümel durch Filtration und trocknet diese bei 70°C im Vakuumtrockenschrank bis zur Gewichtskonstanz (ca. 60 h).

Der Gelgehalt des getrockneten Polymers beträgt 96 Gew.% (Bestimmung in Toluol bei Raumtemperatur) und der Quellungsindex des vergelten Anteils beträgt 5,6 (Naßgewicht/Trockengewicht in Toluol). Die OH-Zahl des Polymers beträgt 9 mg KOH/g Polymer und die Glastemperatur des Polymeren beträgt -9,5°C.

### Hydroxylgruppenmodifiziertes SBR-Mikrogel mit 39 Gew.% Styrol [Gel (3)]

Das Gel (3) wird ausgehend vom SBR-Latexvorprodukt von Krylene 1721 (Bayer France, La Wantzenau) hergestellt. Hierzu wird der Latex nach der Polymerisation und nach der Entfernung der nichtumgesetzten Monomeren (d.h. vor der Stabilisierung mit Alterungsschutzmitteln und vor der Zugabe von Öl) verwendet. Der Latex wird mit 1,0 phr Dicumylperoxid bezogen auf Festprodukt wie beim Gel (1) beschrieben, vernetzt und wie bei Gel (2) beschrieben, mit Hydroxyethylmethacrylat (3 phr) modifiziert. Die Isolation des vernetzten Gels aus dem Latex erfolgt wie beim Gel (2) beschrieben.

Charakteristische Daten des Gels sind:
- Durchmesser:: d₁₀ = 38 nm; d₅₀ = 51 nm; d₈₀ = 60 nm:
- Gelgehalt in Toluol:: 95 Gew.%;
- Quellungsindex in Toluol:: 6,6;
- Glastemperatur:: -23°C
- OH-Zahl:: 12,7 mg KOH/g Polymer

### Compoundherstellung, Vulkanisation und Eigenschaften der Vulkanisate

In der 1. Mischungsserie wird der erfindungsgemäße Effekt mit Si 69 bei einem nicht hydroxylmodifizierten SBR-Mikrogel (Gel 1) demonstriert:

Hierzu werden in einem Laborinnenmischer gemäß nachfolgender Rezepturen die Mischungskomponenten in der angegebenen Reihenfolge 4 Min. bei 140°C gemischt, wobei in dieser Mischungsserie das Gel zusammen mit einem Teil des Naturkautschuks in der Form eines NR-Masterbatch eingearbeitet wird:

| Mischungs-Nr.: | 1 | 2 |
|---|---|---|
| TSR 5, Defo 700* | 40 | 40 |
| Gel 1/ NR-Masterbatch (50/50) | 120 | 120 |
| Antilux® 654** | 1,5 | 1,5 |
| Stearinsäure | 3 | 3 |
| Zinkoxid | 3 | 3 |
| Vulkanox® 4010 NA*** | 1 | 1 |
| Vulkanox® HS**** | 1 | 1 |
| Si 69***** | 0 | 6 |

| | | |
|---|---|---|
| * = Naturkautschuk, vermastiziert, | | |
| ** = Mikrokristallines Ozonschutzwachs / Rhein Chemie, | | |
| *** = N-isopropyl-N'-phenyl-p-phenylendiamin / Bayer AG (IPPD), | | |
| **** = 2,2,4-Trimethyl-1,2-dihydrochinolin (TMQ) / Bayer AG, | | |
| ***** = Bis(tri-ethoxy-silyl-propyl-disulfon) / Degussa, | | |

Nach dem Ausstoßen aus dem Innenmischer werden Schwefel und Beschleuniger auf einer auf 40°C vorgeheizten Walze zugemischt, wobei die Mischguttemperatur am Ende der Mischzeit ca. 70°C beträgt.

| Mischungs-Nr. | 1 | 2 |
|---|---|---|
| Schwefel | 1,6 | 1,6 |
| Vulkacit® NZ¹⁾ | 1,0 | 1,0 |

| | | |
|---|---|---|
| ¹⁾ = N-Tert.-butyl-2-benzothiazylsulfenamid (TBBS) / Bayer AG | | |

Nach dem Mischen werden die Compoundviskositäten bei 100°C ML 1+4 und die Mooneyrelaxation bestimmt:

| Mischungs-Nr.: | 1 | 2 |
|---|---|---|
| ML 1+4 (100°C) [ME] | 44,8 | 47 |
| MR 30 [%] | 4,5 | 7,6 |

Die Vulkansiationsgeschwindigkeiten der Mischungen werden in einem Rheometerexperiment bei 160°C untersucht Auf diese Weise werden charakteristische Heizzeiten wie z.B. t₉₅ bestimmt. Für die Herstellung der Vulkanisate wird als Vulkansiationszeit t₉₅₊₅ gewählt:

| Mischungs-Nr.: | 1 | 2 |
|---|---|---|
| Vulkanisationszeit [min] | 16,5 | 19 |

Auf der Basis o.g. Compounds werden folgende Prüfergebnisse erhalten:

| Mischungs-Nr.: | 1 | 2 |
|---|---|---|
| Zugfestigkeit [MPa] | 25,4 | 26,8 |
| Bruchdehnung [%] | 627 | 612 |
| Spannungswert bei 100 % Dehnung [MPa] | 1,5 | 2 |
| Spannungswert bei 300 % Dehnung [MPa] | 6,1 | 7,9 |
| Härte Shore A, 23 °C | 58 | 60 |
| Härte Shore A, 70 °C | 51 | 56 |
| Rückprallelastizität, 23 °C [%] | 41 | 45 |
| Rückprallelastizität, 70 °C [%] | 63 | 66 |
| Abrieb/60 DIN 53516 [mm3] | 197 | 174 |
| Abrieb/60 DIN 53516 [mm3] | 121 | 107 |

### In der 2. Mischungsserie wird die Wirkung von Si 69 bei einem hydroxylgruppenhaltigen SBR-Mikrogel (Gel 2) demonstriert:

Hierzu werden in einem Laborinnenmischer gemäß nachfolgender Rezepturen die Mischungskomponenten in der angegebenen Reihenfolge 4 Min. bei 140°C gemischt:

| Mischungs-Nr.: | 1 | 2 |
|---|---|---|
| TSR 5, Defo 700 | 100 | 100 |
| Gel 2 | 75 | 75 |
| Enerthene²⁾ 1849-1 | 3 | 3 |
| Antilux® 654 | 1,5 | 1,5 |
| Stearinsäure | 3 | 3 |
| Zinkoxid | 3 | 3 |
| Vulkanox® 4010 NA | 1 | 1 |
| Vulkanox® HS | 1 | 1 |
| Si 69 | 0 | 6 |

| | | |
|---|---|---|
| ²⁾ = Mineralölweichmacher / BP | | |

Nach dem Ausstoßen aus dem Innenmischer werden Schwefel und Beschleuniger auf einer auf 40°C vorgeheizten Walze zugemischt, wobei die Mischguttemperatur am Ende der Mischzeit ca. 70°C beträgt.

| Mischungs-Nr. | 1 | 2 |
|---|---|---|
| Schwefel | 1,6 | 1,6 |
| Vulkacit® NZ | 1 | 1 |
| Vulkacit® D³⁾ | 2 | 2 |

| | | |
|---|---|---|
| ³⁾ = Diphenylguanidin (DPG) / Bayer AG | | |

Nach dem Mischen werden die Compoundviskositäten bei 100°C ML 1+4 und die Mooneyrelaxation bestimmt:

| Mischungs-Nr.: | 1 | 2 |
|---|---|---|
| ML 1+4 (100°C) [ME] | 37,7 | 54,7 |
| MR 30 [%] | 5,3 | 12,4 |

Die Vulkansiationsgeschwindigkeiten der Mischungen werden in einem Rheometerexperiment bei 160°C untersucht Auf diese Weise werden charakteristische Heizzeiten wie z.B. t₉₅ bestimmt. Für die Herstellung der Vulkanisate wird als Vulkansiationszeit t₉₅₊₅ gewählt:

| Mischungs-Nr.: | 1 | 2 |
|---|---|---|
| Vulkanisationszeit [min] | 11,5 | 18,4 |

Auf der Basis o.g. Compounds werden folgende Prüfergebnisse erhalten:

| Mischungs-Nr.: | 1 | 2 |
|---|---|---|
| Zugfestigkeit [MPa] | 21,7 | 17,9 |
| Bruchdehnung [%] | 619 | 416 |
| Spannungswert bei 100 % Dehnung [MPa] | 1,7 | 3,8 |
| Spannungswert bei 300 % Dehnung [MPa] | 6,5 | 11,3 |
| Härte Shore A, 23 °C | 59 | 68 |
| Härte Shore A, 70 °C | 52 | 62 |
| Rückprallelastizität, 23 °C [%] | 29 | 33 |
| Rückprallelastizität, 70 °C [%] | 56 | 63 |
| Abrieb/60 DIN 53516 [mm3] | 213 | 213 |
| Abrieb/60 DIN 53516 [mm3] | 183 | 116 |

### In der 3. Mischungsserie wird die Wirkung von Si 69 bei einem hydroxylgruppenhaltigen SBR-Mikrogel mit 39 Gew.% Styrol demonstriert:

Hierzu werden in einem Laborinnenmischer gemäß nachfolgender Rezepturen die Mischungskomponenten in der angegebenen Reihenfolge 4 Min. bei 140°C gemischt:

| Mischungs-Nr.: | 1 | 2 |
|---|---|---|
| TSR 5, Defo 700 | 100 | 100 |
| Gel 2 | 75 | 75 |
| Enerthene® 1849-1 | 3 | 3 |
| Antilux® 654 | 1,5 | 1,5 |
| Stearinsäure | 3 | 3 |
| Zinkoxid | 3 | 3 |
| Vulkanox® 4010 NA | 1 | 1 |
| Vulkanox® HS | 1 | 1 |
| Si 69 | 0 | 6 |

Nach dem Ausstoßen aus dem Innenmischer werden Schwefel und Beschleuniger auf einer auf 40°C vorgeheizten Walze zugemischt, wobei die Mischguttemperatur am Ende der Mischzeit ca. 70°C beträgt.

| Mischungs-Nr. | 1 | 2 |
|---|---|---|
| Schwefel | 1,6 | 1,6 |
| Vulkacit® NZ | 1 | 1 |
| Vulkacit® D | 2 | 2 |

Nach dem Mischen werden die Compoundviskositäten bei 100°C ML 1+4 und die Mooneyrelaxation bestimmt:

| | | |
|---|---|---|
| Mischungs-Nr.: | 1 | 2 |
| ML 1+4 (100°C) [ME] | 46,5 | 63,9 |
| MR 30 [%] | 8,6 | 16,4 |

Die Vulkansiationsgeschwindigkeiten der Mischungen werden in einem Rheometerexperiment bei 160°C untersucht Auf diese Weise werden charakteristische Heizzeiten wie z.B. t₉₅ bestimmt. Fur die Herstellung der Vulkanisate wird als Vulkanisationszeit t₉₅₊₅ gewählt:

| Mischungs-Nr.: | 1 | 2 |
|---|---|---|
| Vulkanisationszeit t 95+5 [min] | 9,4 | 10,6 |

Auf der Basis o.g. Compounds werden folgende Prüfergebnisse erhalten:

| Mischungs-Nr.: | 1 | 2 |
|---|---|---|
| Zugfestigkeit [MPa] | 17,4 | 21,3 |
| Bruchdehnung [%] | 610 | 563 |
| Spannungswert bei 100 % Dehnung [MPa] | 1,3 | 2,4 |
| Spannungswert bei 300 % Dehnung [MPa] | 3,5 | 7,7 |
| Härte Shore A, 23 °C | 51 | 56 |
| Härte Shore A, 70 °C | 44 | 51 |
| Rückprallelastizität, 23 °C [%] | 20 | 23 |
| Rückprallelastizität, 70 °C [%] | 63 | 68 |
| Abrieb/60 DIN 53516 [mm3] | 318 | 253 |
| Abrieb/60 DIN 53516 [mm3] | 303 | 161 |

## Patentansprüche

1. Kautschukmischungen aus mindestens einem doppelbindungshaltigen Kautschuk (A), mindestens einem Kautschukgel (B) und mindestens einer schwefelhaltigen Organosiliciumverbindung (C), wobei der Anteil an doppelbindungshaltigem Kautschuk (A) 100 Gew.-Teile, der Anteil an Kautschukgel (B) 1 bis 150 Gew.-Teile und der Anteil an siliciumorganischer Schwefelverbindung (C) 0,2 bis 20 Gew.-Teile beträgt, sowie gegebenenfalls Kautschukhilfsmitteln und gegebenenfalls Füllstoffen.

2. Mischungen nach Anspruch 1, dadurch gekennzeichnet daß als Kautschuk (A) die doppelbindungshaltigen Kautschuke NR, BR, SBR, IIR und EPDM eingesetzt werden.

3. Mischungen nach Anspruch 1, dadurch gekennzeichnet, daß als Kautschukgele (B) BR-, NR-, NBR-, CR- und SBR-Mikrogele eingesetzt werden.

4. Mischungen nach Anspruch 1, dadurch gekennzeichnet, daß als siliciumorganische Schwefelverbindung (C) Bis(triethoxy-silyl-propyl-disulfan) eingesetzt wird.

5. Verwendung der Mischungen nach Anspruch 1 zur Herstellung von Formkörpern.
